# EUROPÄISCHE PATENTSCHRIFT

(11) **EP 2 875 408 B1**
(45) Veröffentlichungstag und Bekanntmachung des Hinweises auf die Patenterteilung: **11.09.2019**
(21) Anmeldenummer: 13732465.3
(22) Anmeldetag: 26.06.2013
(51) Int. Cl.: G05B 9/03

(54) **FELDGERÄT ZUR BESTIMMUNG ODER ÜBERWACHUNG EINER PROZESSGRÖßE IN DER AUTOMATISIERUNGSTECHNIK**
FIELD DEVICE FOR DETERMINING OR MONITORING A PROCESS VARIABLE IN AUTOMATION TECHNOLOGY
APPAREIL DE CHAMP POUR LA DÉTERMINATION OU LA SURVEILLANCE D'UNE GRANDEUR DE PROCESSUS DANS LA TECHNIQUE DE L'AUTOMATISATION

(30) Priorität: 23.07.2012 DE 102012106652
(43) Veröffentlichungstag der Anmeldung: 27.05.2015
(73) Patentinhaber: Endress+Hauser SE+Co. KG, 79689 Maulburg (DE)
(72) Erfinder: GIRARDEY Romuald, F-68730 Blotzheim (FR)
(74) Vertreter: Andres, Angelika Maria
(86) Internationale Anmeldenummer: PCT/EP2013/063430
(87) Internationale Veröffentlichungsnummer: WO 2014/016074

(56) Entgegenhaltungen:
- DE-A1-102009 002 734
- DE-A1-102009 026 785
- DE-A1-102009 028 938
- US-A- 4 752 869
- US-A1- 2011 313 580

## Beschreibung

Die Erfindung betrifft ein Feldgerät zur Bestimmung oder Überwachung einer Prozessgröße in der Automatisierungstechnik. Das Feldgerät ist so ausgestaltet, dass es einem Sicherheitsstandard genügt, der in einer vorgegebenen sicherheitskritischen Anwendung gefordert ist. Weiterhin umfasst das Feldgerät einen Sensor, der nach einem definierten Messprinzip arbeitet, und eine Kontroll-/Auswerteeinheit, die die vom Sensor gelieferten Messdaten entlang von zumindest drei redundanten und/oder diversitär ausgelegten Messkanälen aufbereitet und auswertet. Eine entsprechende Lösung ist aus der WO 2004/013585 A1 bekannt geworden.

In der Automatisierungstechnik, insbesondere in der Prozessautomati-sierungstechnik, werden Feldgeräte eingesetzt, die zur Bestimmung und Überwachung von Prozessvariablen dienen. Beispiele für derartige Feldgeräte sind Füllstandsmessgeräte, Durchflussmessgeräte, Analysemessgeräte, Druck- und Temperaturmessgeräte, Feuchte- und Leitfähigkeitsmessgeräte, Dichte und Viskositätsmessgeräte. Die Sensoren dieser Feldgeräte erfassen die entsprechenden Prozessvariablen, z.B. den Füllstand, den Durchfluss, den pH-Wert, die Stoffkonzentration, den Druck, die Temperatur, die Feuchte, die Leitfähigkeit, die Dichte oder die Viskosität.

Unter den Begriff 'Feldgeräte' werden in Verbindung mit der Erfindung aber auch Aktoren, z. B. Ventile oder Pumpen, subsumiert, über die beispielsweise der Durchfluss einer Flüssigkeit in einer Rohrleitung oder der Füllstand in einem Behälter veränderbar ist. Eine Vielzahl solcher Feldgeräte wird von der Firmengruppe Endress + Hauser angeboten und vertrieben.

In der Regel sind Feldgeräte in modernen automatisierungstechnischen Anlagen über Kommunikationsnetzwerke, wie HART- Multidrop, Punkt zu Punkt Verbindung, Profibus, Foundation Fieldbus, mit einer übergeordneten Einheit verbunden, die als Leitsysteme oder Leitwarte bezeichnet wird. Diese übergeordnete Einheit dient zur Prozesssteuerung, zur Prozessvisualisierung, zur Prozessüberwachung sowie zur Inbetriebnahme und zum Bedienen der Feldgeräte. Für den Betrieb von Feldbussystemen notwendige Zusatz-komponenten, die direkt an einen Feldbus angeschlossen sind und die insbesondere zur Kommunikation mit den übergeordneten Einheiten dienen, werden ebenfalls häufig als Feldgeräte bezeichnet. Bei diesen Zusatz-komponenten handelt es sich z. B. um Remote I/Os, Gateways, Linking Devices, Controller oder Wireless Adapter.

Je nach Anwendungsfall müssen die Feldgeräte unterschiedlichsten Sicherheitsanforderungen genügen. Um den jeweiligen Sicherheits-anforderungen, z.B. der IEC61508 (SIL-Standard 'Safety Integrity Level') zu genügen, müssen die Feldgeräte redundant und/oder diversitär ausgelegt sein.

Redundanz bedeutet erhöhte Sicherheit durch doppelte oder mehrfache Auslegung aller sicherheitsrelevanter Hard- und Software-Komponenten. Diversität bedeutet, dass die in den unterschiedlichen Messkanälen befindlichen Hardware-Komponenten, wie z.B. ein Mikroprozessor, von unterschiedlichen Herstellern stammen und/oder dass sie von unterschiedlichem Typ sind. Im Falle von Software-Komponenten erfordert die Diversität, dass die in den Mikroprozessoren gespeicherte Software aus unterschiedlichen Quellen, sprich von unterschiedlichen Herstellern bzw. Programmierern stammt. Durch alle diese Maßnahmen soll sichergestellt werden, dass ein sicherheitskritischer Ausfall des Feldgeräts ebenso wie das Auftreten von gleichzeitig auftretenden systematischen Fehlern bei der Messwertbereitstellung mit hoher Wahrscheinlichkeit ausgeschlossen ist. Ein Beispiel für eine sicherheitsrelevante Applikation ist die Füllstands-überwachung in einem Tank, in dem eine brennbare oder auch eine nicht brennbare, dafür aber wassergefährdende Flüssigkeit gelagert ist. Hier muss sichergestellt sein, dass die Zufuhr von Flüssigkeit zu dem Tank sofort unterbrochen wird, sobald ein maximal zulässiger Füllstand erreicht ist. Dies wiederum setzt voraus, dass das Messgerät hoch zuverlässig den Füllstand detektiert und fehlerfrei arbeitet.

Zwar ist bei den bekannten Lösungen der Messkanal redundant und/oder diversitär ausgelegt, jedoch stellt die Auswerteeinheit, üblicherweise ein Mikroprozessor, der als Voter ausgelegt ist, die Achillesferse eines Feldgeräts dar, das hohen und höchsten Sicherheitsanforderungen genügen soll. Der Mikroprozessor ist monolithisch ausgestaltet. Tritt hier ein gefahrbringender Fehler (entsprechend der Nomenklatur des zuvor genannten Standards) auf, so versagt das Feldgerät. Um den SIL 3 Standard zu erfüllen, darf der Anteil der gefahrbringenden Fehler zu der Anzahl aller möglichen Fehler bei maximal einem Prozent liegen. Mit einem herkömmlichen Mikroprozessor ist dieser Sicherheitslevel nicht zu erreichen.

Aus der DE 10 2009 026 785 A1 ist ein Feldgerät zur Bestimmung und/oder Überwachung einer physikalischen oder chemischen Prozessgröße, bestehend aus einem Sensor, der entsprechend einem vorgegebenen Messprinzip arbeitet, und einer Regel-Auswerteeinheit, die die von dem Sensor gelieferten Messdaten/Messwerte in Abhängigkeit von einem in der jeweiligen sicherheitskritischen Anwendung geforderten Sicherheitsstandard entlang einer vorgegebenen Anzahl von redundanten oder diversitären oder redundanten und diversitären Messpfaden aufbereitet und/oder auswertet. Für den Fall, dass sich die Antwortzeiten auf eine sprunghafte Änderung der physikalischen oder chemischen Prozessgröße in zumindest zwei Messpfaden voneinander unterscheiden, ist die Regel-/Auswerteeinheit so ausgestaltet, dass sie während der sprunghaften Änderung der physikalischen oder chemischen Prozessgröße automatisch den Messpfad auswählt bzw. konfiguriert, der die geringere Antwortzeit aufweist.

Der Erfindung liegt die Aufgabe zugrunde, ein Feldgerät vorzuschlagen, das sich durch eine erhöhte funktionale Sicherheit auszeichnet.

Die Aufgabe wird dadurch gelöst, dass die Kontroll-/Auswerteeinheit dreifach redundant und/oder diversitär ausgelegt ist und dass der Kontroll-/Auswerteeinheit ein Voter zugeordnet, der aus mehreren Komponenten besteht, die zumindest teilweise zweifach redundant ausgelegt sind. Mit dem erfindungsgemäßen Voter lassen sich sogar die hohen Sicherheits-anforderungen von SIL 3 erfüllen. Gemäß der Erfindung ist vorgesehen, dass der Voter als Mehrheitsvoter ausgestaltet ist und zumindest drei Komponenten aufweist: eine Komparatorstufe, die die von den einzelnen Messkanälen gelieferten Ausgangssignale miteinander vergleicht, eine Fehlererkennungsstufe, die durch geeignete Verknüpfung der Ausgangs-signale der Komparatorstufe einen in einem Messkanal auftretenden Fehler erkennt, und eine Ausgangsauswahlstufe. Wie nachfolgend noch näher erläutert wird, lässt sich der Voter mit sehr einfachen Teilkomponenten realisieren.

Als besonders günstig wird es in Verbindung mit dem erfindungsgemäßen Feldgerät angesehen, wenn der Voter aus mehreren Voterkanälen besteht, wobei jeder Voterkanal einen Teil der Komparatorstufe und einen Teil der Fehlererkennungsstufe umfasst, und wenn jeder Voterkanal als integrierter Bestandteil des zugehörigen Messkanals ausgestaltet ist. Da weiterhin vorgesehen ist, dass jedem Messkanal eine eigene Spannungsversorgung zugeordnet ist, bleibt der vorgegebene Sicherheitslevel erhalten, selbst wenn ein Messkanal oder seine Spannungsversorgung komplett ausfällt.

Gemäß einer bevorzugten Ausgestaltung des erfindungsgemäßen Feldgeräts weist die Komparatorstufe in jedem Voterkanal zwei Komparatoren auf, die das Ausgangssignal des ausgewählten Messkanals jeweils mit dem Ausgangs-signal der verbleibenden Messkanäle vergleichen, so dass die Ausgangs-signale der drei Messkanäle zweifach von redundanten Komparatoren verglichen werden.

Bevorzugt handelt es sich bei der Fehlererkennungsstufe um eine Logikstufe, die aus Logikgattern aufgebaut ist. Als vorteilhaft wird es weiterhin angesehen, wenn jede Logikstufe aus zwei UND Gattern und einem ODER Gatter oder aus einer gleichwertigen Gatterkombination besteht, wobei an den Eingängen des ersten UND Gatters die Ausgangssignale der Komparatoren des ersten Voterkanals anliegen, der dem ausgewählten Messkanal zugeordnet ist, und wobei an dem zweiten UND Gatter die zu den Eingängen des ersten UND Gatters redundanten Ausgangssignale der Komparatoren des zweiten Voterkanals und des dritten Voterkanals anliegen, und wobei die Ausgangssignale des ersten UND Gatters und des zweiten UND Gatters die Eingangssignale des nachgeschalteten ODER Gatters bilden. Da der Voter für drei Messkanäle sechs Komparatoren und sechs Fehlererkennungseinheiten aufweist, ist die Information über einen in einem Messkanal auftretenden Fehler zweifach redundant. Hinzu kommt, dass Information über einen zweifach in einem Messkanal auftretenden Fehler über Komponenten gewonnen wird, die auf zwei Messkanäle verteilt sind. Aufgrund dieser Anordnung kann auch ein Fehler, der in der Komparatorstufe oder in der Fehlererkennungsstufe auftritt, detektiert werden.

Insbesondere ist die Ausgangsauswahlstufe so ausgestaltet, dass sie entweder einen Messkanal auswählt, wenn kein Fehler oder ein Fehler in einem der Messkanäle oder in einem der Voterkanäle auftritt, oder dass sie eine Fehlermeldung generiert, wenn zumindest zwei Fehler in zumindest zwei Messkanälen und/oder zwei Voterkanälen auftreten.

Eine bevorzugte Ausführungsform des erfindungsgemäßen Feldgeräts sieht vor, dass die Ausgangsauswahlstufe einen Multiplexer aufweist, der so ausgestaltet ist, dass er in Abhängigkeit von den Ausgangssignalen der Fehlererkennungsstufe eine Auswahl zwischen den Ausgangssignalen der
Messkanäle und einem Alarmsignal trifft.

In einer vorteilhaften Ausgestaltung ist bzw. sind die Kontroll-/Auswerteeinheit mit Messkanälen und/oder die zugehörigen Komponenten des Voters bzw. der Voterkanäle zumindest teilweise als rekonfigurierbarer Logikbaustein mit mehreren partiell dynamisch rekonfigurierbaren Funktionsmodulen in den Messkanälen ausgebildet.

Weiterhin wird vorgeschlagen, dass die Kontroll-/Auswerteeinheit die Funktionsmodule in den Messkanälen in Abhängigkeit von der jeweils definierten sicherheitskritischen Anwendung so konfiguriert, dass das Feldgerät dem geforderten Sicherheitsstandard genügt. Als vorteilhaft wird es in diesem Zusammenhang erachtet, wenn neben softwarebasierten und hardwarebasierten Messkanälen zumindest ein Messkanal analogbasiert in einem FPAA konfiguriert ist.

Hierzu ist der Kontroll-/Auswerteeinheit zumindest ein Mikroprozessor zugeordnet ist, der die Funktionsmodule eines Messkanals und/oder eines Voterkanals, in dem ein Fehler detektiert wird, dynamisch partiell rekonfiguriert.
Um die Performance des Logikbausteins zu optimieren, ist der zumindest eine Mikroprozessor in einem statischen Bereich des Logikbausteins permanent konfiguriert.

Um den geforderten Sicherheitsstandard zu erfüllen, sind die einzelnen Messkanäle so voneinander beabstandet, dass eine Temperatur- und/oder eine Spannungsänderung in einem Messkanal keinen Einfluss auf einen benachbarten Messkanal hat.

Aus der WO 2009/062954 A1 ist bereits ein Feldgerät zur Bestimmung oder Überwachung einer Prozessgröße in der Prozessautomatisierung, bestehend aus einem Sensor, der nach einem definierten Messprinzip arbeitet, und einer Kontroll-/Auswerteeinheit, die die vom Sensor gelieferten Messdaten in Abhängigkeit von einem in der jeweiligen sicherheitskritischen Anwendung geforderten Sicherheitsstandard entlang von mindestens zwei gleichwertigen Messpfaden aufbereitet und auswertet. Die bekannte Kontroll-/Auswerte-einheit ist zumindest teilweise als rekonfigurierbarer Logikbaustein (FPGA) mit mehreren partiell dynamisch rekonfigurierbaren Funktionsmodulen ausgebildet. Die Kontroll-/Auswerteeinheit konfiguriert die Funktionsmodule in den Messpfaden in Abhängigkeit von der jeweils definierten sicherheits-kritischen Anwendung derart, dass das Feldgerät entsprechend dem geforderten Sicherheitsstandard ausgelegt ist. In der WO 2009/062954 A1 sind Möglichkeiten genannt, wie Fehler in den Messkanälen detektiert und behoben werden. Dieser Offenbarungsgehalt ist der vorliegenden Erfindung zuzurechnen.

Die Erfindung wird anhand der nachfolgenden Figuren näher erläutert. Es zeigt:
Fig. 1: ein Blockschaltbild einer bevorzugten Ausgestaltung der Kontroll-/Auswerteeinheit mit dem erfindungsgemäß zweifach redundant ausgelegten Voter,
Fig. 2: ein Blockschaltbild einer bevorzugten Ausgestaltung der Kontroll-Auswerteeinheit, die bei dem erfindungsgemäßen Feldgerät eingesetzt werden kann.
Fig. 3a bis Fig. 3f: Tabellen, die die Fehleranalyse der erfindungsgemäß verwendeten Kontroll-/Auswerteeinheit mit dem redundanten Voter verdeutlichen.

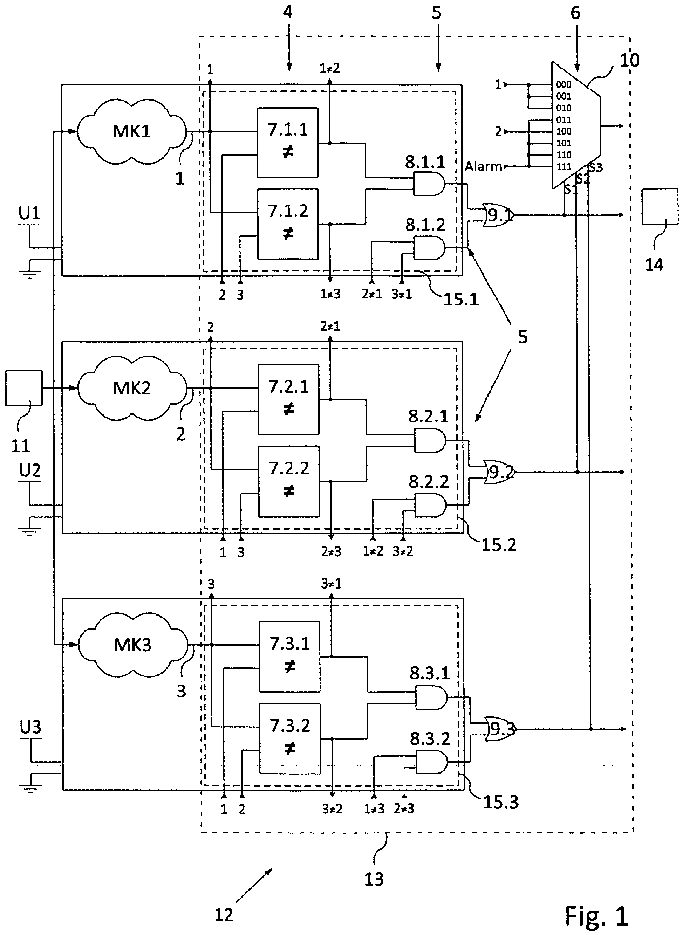

Fig. 1 zeigt ein Blockschaltbild einer bevorzugten Ausgestaltung einer Kontroll-/Auswerteeinheit 12, wie sie im Zusammenhang mit dem erfindungsgemäßen Feldgerät nutzbar ist. Die Kontroll-/Auswerteeinheit 12 zeichnet sich durch einen zweifach redundanten Voter 13 aus. Hierzu sind zumindest einige der Komponenten des Voters zweifach redundant ausgelegt.

Der in Fig. 1 dargestellte Voter 13 ist als Mehrheitsvoter ausgestaltet und umfasst drei Komponenten bzw. Stufen:
- eine Komparatorstufe 4, die die von den einzelnen Messkanälen MK1, MK2, MK3 gelieferten Ausgangssignale 1, 2, 3 miteinander vergleicht;
- eine Fehlererkennungsstufe 5, die durch geeignete Verknüpfung der Ausgangssignale 1, 2, 3 der Komparatorstufe 4 einen in einem Messkanal MK1; MK2; MK3 auftretenden Fehler erkennt, und
- eine Ausgangsauswahlstufe 6.

Der Voter 13 (Strich-Punkt-Linie) weist mehrere Voterkanäle 15.1, 15.2, 15.3 auf, wobei jeder Voterkanal 15.1, 15.2, 15.3 (gestrichelte Linien) einen Teil der Komparatorstufe 4 und einen Teil der Fehlererkennungsstufe 5 umfasst und wobei jeder Voterkanal 15.1, 15.2, 15.3 als integrierter Bestandteil des zugehörigen Messkanals MK1; MK2; MK3 ausgestaltet ist. Jedem Messkanal MK1, MK2, MK3 mit integriertem Voterkanal 15.1, 15.2, 15.3 ist eine eigene Spannungsversorgung U1, U2, U3 (durchgezogene Linien) zugeordnet.

Die Komparatorstufe 4 eines Voterkanals 15.1, 15.2, 15.3 weist zwei Komparatoren 7 auf, die das Ausgangssignal 1; 2; 3 des ausgewählten Messkanals MK1; MK2, MK3 jeweils mit dem Ausgangssignal 1; 2; 3 der verbleibenden Messkanäle MK1, MK2, MK3 vergleichen. Insbesondere werden Ausgangssignale 1, 2, 3 der drei Messkanäle MK1, MK2, MK3 zweifach von redundanten Komparatoren 7 verglichen.

Im gezeigten Fall ist die Fehlererkennungsstufe 5 als Logikstufe ausgestaltet und aus Logikgattern 8, 9 aufgebaut. Jede in einen Messkanal MK1, MK2, MK3 integrierte Logikstufe 5 besteht aus zwei UND Gattern 8 und einem ODER Gatter 9. Betrachten wir im Folgenden den Voterkanal 15.1 mit dem Messkanal MK1, der Komparatorstufe 4, bestehend aus zwei Komparatoren 7.1.1, 7.1.2, und der Fehlererkennungsstufe 5, die im gezeigten Fall aus den UND Gattern 8.1.1, 8.1.2 und dem ODER Gatter 9.1 besteht. Das ODER Gatter 9.1 zählt zu der Fehlererkennungsstufe 4, liegt aber außerhalb des Voterkanals 15.1.

Das Ausgangssignal 1 des Messkanals MK1 und das Ausgangssignal 2 des Messkanals MK2 liegen an dem Komparator 7.1.1 an, während das Ausgangssignal 1 des Messkanals MK1 und das Ausgangssignal 3 des Messkanals MK3 an dem Komparator 7.1.2 miteinander verglichen werden. Analoge Vergleiche der Ausgangssignale 1, 2, 3 der Messkanäle MK1, MK2, MK3 werden in den beiden Voterkanälen 15.2, 15.3 ausgeführt. Allgemein lässt sich sagen, dass in jedem der Messkanäle MK1; MK2; MK3 das Ausgangssignal 1, 2, 3 des entsprechenden Messkanals MK1; MK2; MK3 mit den Ausgangssignalen 1, 2, 3 der verbleibenden Messkanäle MK1; MK2, MK3 verglichen wird. Über die redundanten Komparatoren 7.1.1, 7.1.2, 7.2.1, 7.2.2, 7.3.1, 7.3.2 werden Unterschiede 1≠2, 1≠3, 2≠1, 3≠3, 3≠1, 3≠2 in den Ausgangssignalen 1, 2, 3 der Messkanäle MK1, MK2, MK3 detektiert. Die Genauigkeit bei dem Vergleich der Ausgangssignale 1, 2, 3 von zwei Messkanälen MK1, MK2; MK3 über einen der Komparatoren 7.1.1, 7.1.2, 7.2.1, 7.2.2, 7.3.1, 7.3.2 ist durch die Genauigkeit des Messkanals MK1, MK2, MK3 mit der geringsten Genauigkeit vorgegeben. Beträgt die Genauigkeit des Messkanals MK1 beispielsweise 1% und die Genauigkeit des Messkanals MK2 0,1%, so vergleichen die Komparatoren 7.1.1, 7.2.1 beide Messkanäle MK1, MK2 mit einer Genauigkeit von 1%.

Um herauszufinden, in welchem Messkanal MK1, MK2, MK3 ein Fehler aufgetreten ist, werden die Ausgänge der Komparatoren 7.1.1, 7.1.2, 7.2.1, 7.2.2, 7.3.1, 7.3.2 an die UND Gatter 8.1.1, 8.1.2, 8.2.1, 8.2.2, 8.3.1, 8.3.2 weitergeleitet. Insbesondere liegen die Ausgangssignale 1≠2, 1≠3 der Komparatorstufe 4 mit den Komparatoren 7.1.1, 7.1.2 an dem ersten UND Gatter 8.1.1 an, während die Ausgangssignale 2≠1, 3≠1, die aus den Messkanälen MK2, MK3 stammen, an dem zweiten UND Gatter 8.1.2 anliegen. Da den drei Messkanälen MK1, MK2, MK3 sechs Komparatoren 7.1.1, 7.1.2, 7.2.1, 7.2.2, 7.3.1, 7.3.2 und sechs Fehlererkennungs-komponenten 8.1.1, 8.1.2, 8.2.1, 8.2.2, 8.3.1, 8.3.2 zugeordnet sind, tritt die Information über eine Fehlfunktion in einem der Messkanäle MK1, MK2, MK3 jeweils zweifach redundant auf. Zudem stammt die Information auch noch aus unterschiedlichen Messkanälen MK1, MK2, MK3.

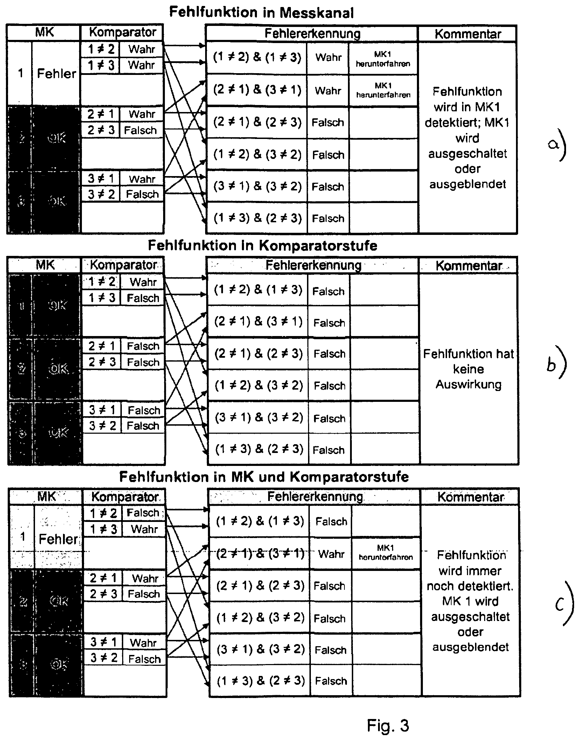

Diese Ausgestaltung des redundanten Voters 13 Lösung hat den Vorteil, neben dem Erkennen der Fehlfunktion in einem Messkanal MK1, MK2, MK3 auch eine Fehlfunktion in der Komparatorstufe 4 oder in der Fehlererkennungsstufe 5 oder in einer Kombination der verschiedenen Komponenten 4, 5 zu detektieren. Eine Tabelle, die die Möglichkeiten der Fehlererkennung mittels der erfindungsgemäßen Lösung wiedergibt, ist in den Figuren Fig. 3a bis Fig. 3f gezeigt. Sobald ein Fehler in einem der Messkanäle MK1, MK2, MK3 detektiert wird, wird der entsprechende Messkanal MK1, MK2, MK3 ausgeblendet - wird also nicht mehr zur Bereitstellung eines Wertes, z.B. eines Messwertes, herangezogen - und/oder- falls diese Möglichkeit infolge der Verwendung eines rekonfigurierbaren FPGA gegeben ist- ggf. rekonfiguriert. Ist die Kontroll-/Auswerteeinheit 12 als partiell dynamisch rekonfigurierbarer FPGA ausgestaltet, können die Komponenten, die die Fehlfunktion verursacht haben, partiell dynamisch rekonfiguriert werden.

Gemäß einer bevorzugten Ausgestaltung des erfindungsgemäßen Feldgeräts sind die Komparatorstufe 4 und die Fehlererkennungsstufe 5 großteils zweifach redundant ausgelegt und über unterschiedliche Messkanäle MK1, MK2, MK3 verteilt. Da die Kontroll-/Auswerteeinheit 12 letztlich einen einzigen Wert ausgeben muss, muss der Ausgang einkanalig ausgestaltet sein. Dies wird dadurch erreicht, dass die Ausgangsauswahlstufe 6 nur einfach vorliegt. Eine Fehlfunktion der Ausgangsauswahlstufe 6 lässt sich somit nicht erkennen. Im gezeigten Fall wird die Ausgangsauswahlstufe 6 von einem Multiplexer 10 gebildet, der anhand der von den Fehlererkennungsstufen 5 gelieferten Ausgangssignalen S1, S2, S3 den Ausgabewert ermittelt.

Bevorzugt ist die Ausgangsauswahlstufe 6 - z.B. ein Multiplexer 10 - so ausgestaltet ist, dass sie entweder einen Messkanal MK1, MK2, MK3 als korrekt funktionierend auswählt, wenn keine Fehlfunktion vorliegt, oder wenn lediglich eine Fehlfunktion in einem der Messkanäle MK1, MK2, MK3 oder in einem der Voterkanäle 15.1, 15.2, 15.3 auftritt. Die Ausgangsauswahlstufe 6 generiert eine Fehlermeldung, wenn zumindest zwei Fehlfunktionen in zumindest zwei Messkanälen MK1, MK2, MK3 und/oder in zumindest zwei Voterkanälen 15.1, 15.2, 15.3 auftreten. Der Multiplexer 10 trifft also in Abhängigkeit von den Ausgangssignalen der Fehlererkennungsstufe 5 eine Auswahl zwischen den Ausgangssignalen 1, 2, 3 der Messkanäle MK1, MK2, MK3 und einem Alarmsignal.

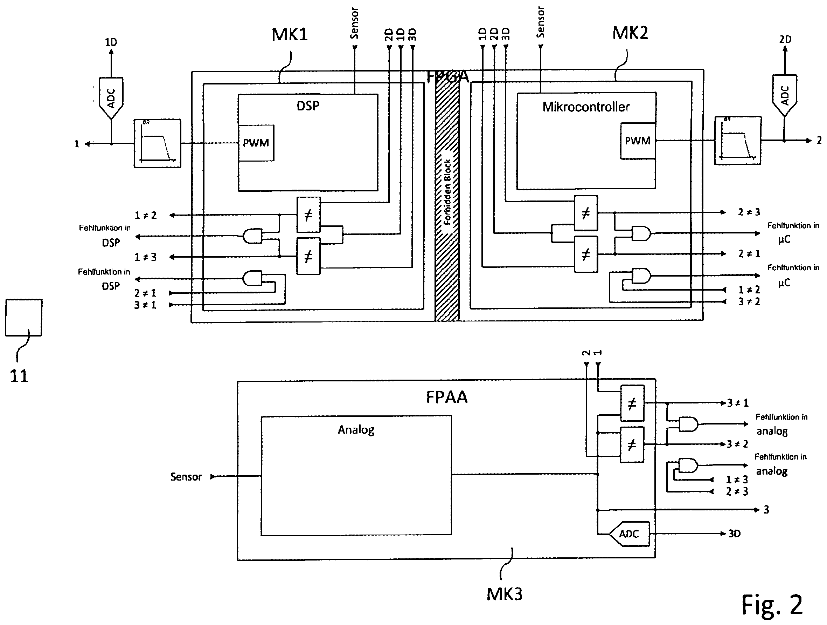

Fig. 2 zeigt ein Blockschaltbild einer bevorzugten Ausgestaltung der redundant ausgestalteten Kontroll-/Auswerteeinheit 12 des erfindungsgemäßen Feldgeräts.

Vorzug ist in Fig. 2 beispielsweise dem Messkanal MK1 gegeben. Messkanal MK1 ist somit der ausgewählte Messkanal, der immer dann ausgewählt wird, wenn überhaupt keine Fehlfunktion auftritt, oder wenn eine Fehlfunktion in Messkanal MK2 oder wenn eine Fehlfunktion in Messkanal MK3 detektiert wird. Wird eine Fehlfunktion im Messkanal MK1 detektiert, so ist der Messkanal MK2 der ausgewählte Messkanal. Treten mehr als eine Fehlfunktion auf, so wird ein Alarmsignal gesetzt. Diese Vorgehensweise ist vorteilhaft, wenn die Kontroll-/Auswerteeinheit 12 Messkanäle MK1, MK2, MK3 mit unterschiedlicher Genauigkeit aufweist. Eine entsprechende Kontroll-/Auswerteeinheit 12 ist beispielhaft in Fig. 2 dargestellt. Die Messkanäle MK1, MK2 mit der DSP (Digitaler Signalprozessor) oder dem Mikrocontroller weisen die höchste Genauigkeit bei der Signalverarbeitung auf. Der analoge Messkanal MK3, der im gezeigten Fall FPAA basiert ausgestaltet ist, weist die geringste Genauigkeit im Hinblick auf die Signalverarbeitung auf. Es wird üblicherweise also immer der Messkanal MK1, MK2 mit der höchsten Genauigkeit als Referenz-Messkanal (Messkanal mit der höchsten Priorität) ausgewählt. Im gezeigten Fall ist der Messkanal MK1. MK1 ist solange Referenz-Messkanal, wie in diesem Messkanal MK1 keine Fehlfunktion auftritt. Zeigt sich im Messkanal MK1 eine Fehlfunktion, wo wird der Messkanal MK2 mit der nächst höheren Genauigkeit zum Referenz-Messkanal. Solange keine Fehlfunktion in einem der Messkanäle MK1, MK2 auftritt, erfolgt die Signalverarbeitung des Sensors 11 bzw. des Feldgeräts also mit der hohen Genauigkeit der Messkanäle mit der DSP bzw. dem Mikrocontroller. Der relativ ungenaue analoge Messkanal MK3 wird nur verwendet, um eine Fehlfunktion in einem der Messkanäle MK1, MK2 zu erkennen.

In den Figuren Fig. 3a bis Fig. 3f sind Tabellen aufgelistet, die die Fehleranalyse der erfindungsgemäß verwendeten Kontroll-/Auswerteeinheit 12 mit dem redundanten Voter 13 verdeutlichen. Bei der Analyse werden nur die Komponenten für sich genommen oder in Kombination betrachtet, die redundant vorliegen: der Messkanal MK, die Komparatorstufe 4, die Fehlererkennungsstufe 5. Da der nicht redundante Anteil an den Komponenten der Kontroll-/Auswerteeinheit 12 gering ist, wird die Sicherheit des Feldgerät dadurch nur in geringem Maße beeinflusst. Ein Fehler im Mikroprozessor 14 würde auch bei der erfindungsgemäßen Lösung zu einem falschen Ausgabewert des Feldgeräts, bei dem es sich im gezeigten Fall um einen Sensor handelt, führen.

Im Detail unterscheiden die Figuren Fig. 3a-3f die folgenden Fälle:
Fig. 3a: es tritt eine Fehlfunktion in einem der Messkanäle MK auf.
Fig. 3b: es tritt eine Fehlfunktion in einer der Komparatorstufen 4 auf.
Fig. 3c: es tritt eine Fehlfunktion in einem der Messkanäle MK und in einer der zugehörigen Komponenten der Komparatorstufen 4 auf.

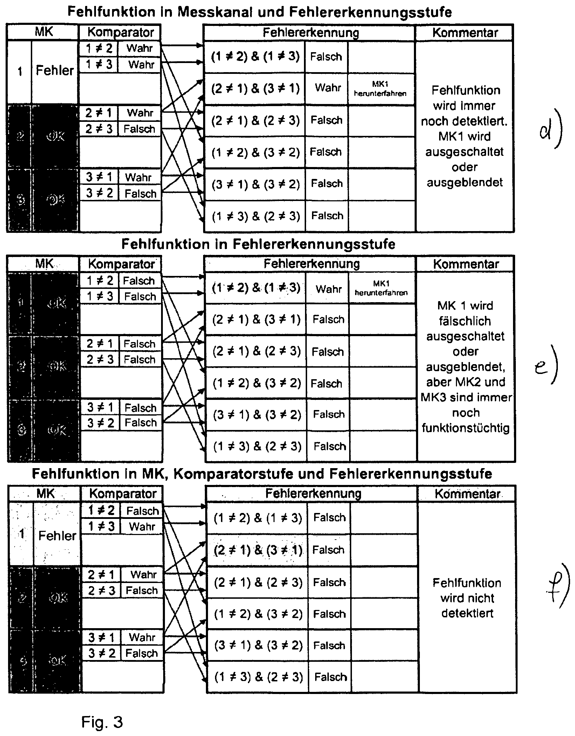

Fig. 3d: es tritt eine Fehlfunktion in einem der Messkanäle MK und in einer der zugehörigen Komponenten der Fehlererkennungsstufen 5 auf.
Fig. 3e: es tritt eine Fehlfunktion in einer der Fehlererkennungsstufen 5 auf.
Fig. 3f: es tritt eine Fehlfunktion in einem der Messkanäle MK1, MK2, MK3, in einer der zugehörigen Komponenten der Komparatorstufe 4 und in einer der zugehörigen Komponenten der Fehlererkennungsstufe 5 auf.

Generell lässt sich sagen, dass sich Fehlfunktionen in den einzelnen Komponenten: Messkanal MK (Fig. 3a), Komparatorstufe 4 (Fig. 3b) und Fehlererkennungsstufe 5 (Fig. 3e) mittels der erfindungsgemäßen Lösung detektieren oder ausblenden lassen. Weiterhin ist es möglich, die Funktionstüchtigkeit des Feldgeräts zu gewährleisten, selbst wenn zwei Fehlfunktionen in der Kontroll-/Auswerteeinheit 12 auftreten (Fig. 3c, Fig. 3e). Die erfindungsgemäße Lösung versagt nur dann, wenn Fehlfunktionen in einem Messkanal MK1, MK2, MK3 und in jeder Komponente des zugehörigen Voterkanals 15.1, 15. 2, 15.3 auftreten (Fig. 3f), oder wenn die entsprechenden Fehlfunktionen über zwei Messkanäle verteilt sind. Allerdings ist die Wahrscheinlichkeit für eine entsprechende Fehlerhäufung so gering, dass die geforderten hohen Sicherheitsanforderungen - insbesondere SIL 3 - erfüllt werden können.

Wie bereits an vorhergehender Stelle erwähnt, ist es besonders vorteilhaft, wenn der Kontroll-/Auswerteeinheit 12 zumindest ein Mikroprozessor 14 zugeordnet ist, der die Funktionsmodule des fehlerhaften Messkanals MK und/oder des fehlerhaften Voters 13 dynamisch rekonfiguriert bzw. partiell dynamisch rekonfiguriert.

Weiterhin wird vorgeschlagen, dass die einzelnen Messkanäle MK - in der Fig. 2 sind dies die Messkanäle MK1, MK2 - so voneinander beabstandet sind, dass eine Temperatur- und/oder eine Spannungsänderung in einem Messkanal MK1 keinen Einfluss auf einen benachbarten Messkanal MK2 haben/hat. Bevorzugt ist für den Fall, dass die Kontroll-/Auswerteeinheit 12 auf einem Logikbaustein FPGA realisiert ist und dynamisch bzw. partiell dynamisch rekonfigurierbar ist, der Mikroprozessor 14 in einem statischen Bereich des Logikbausteins FPGA permanent konfiguriert. Entsprechende Ausgestaltungen sind bereits in der zuvor zitierten Internationalen Patentanmeldung der Anmelderin beschrieben.

### Bezugszeichenliste

- 1: Ausgang Messkanal MK1
- 2: Ausgang Messkanal MK2
- 3: Ausgang Messkanal MK3
- 4: Komparatorstufe
- 5: Fehlererkennungsstufe
- 6: Ausgangsauswahlstufe
- 7: Komparator
- 8: UND Gatter
- 9: ODER Gatter
- 10: Multiplexer
- 11: Sensor
- 12: Kontroll-/Auswerteeinheit
- 13: Voter
- 14: Mikroprozessor
- 15: Voterkanal

- U: Spannungsversorgung

## Patentansprüche

1. Feldgerät zur Bestimmung oder Überwachung einer Prozessgröße in der Automatisierungstechnik, wobei das Feldgerät einem Sicherheitsstandard genügt, der in einer vorgegebenen sicherheitskritischen Anwendung gefordert ist, mit einem Sensor (11), der nach einem definierten Messprinzip arbeitet, und mit einer Kontroll-/Auswerteeinheit (12), die die vom Sensor (1) gelieferten Messdaten entlang von zumindest drei redundanten und/oder diversitär ausgelegten Messkanälen (MK) aufbereitet und auswertet, und
wobei der Kontroll-/Auswerteeinheit (2) ein Voter (13) zugeordnet ist, **dadurch gekennzeichnet, dass** der Voter aus mehreren Komponenten besteht, die zumindest teilweise zweifach redundant ausgelegt sind, wobei der Voter (13) als Mehrheitsvoter ausgestaltet ist und drei Komponenten aufweist: eine Komparatorstufe (4), die die von den einzelnen Messkanälen (MK) gelieferten Ausgangssignale miteinander vergleicht, eine Fehlererkennungsstufe (5), die durch geeignete Verknüpfung der Ausgangssignale der Komparatorstufe (4) einen in einem Messkanal (MK) auftretenden Fehler erkennt, und eine Ausgangsauswahistufe (6).

2. Feldgerät nach Anspruch 1,
wobei der Voter (13) aus mehreren Voterkanälen (15) besteht, wobei jeder Voterkanal (15) einen Teil der Komparatorstufe (4) und einen Teil der Fehlererkennungsstufe (5) umfasst und wobei jeder Voterkanal (15) als integrierter Bestandteil des zugehörigen Messkanals (MK) ausgestaltet ist.

3. Feldgerät nach einem oder mehreren der Ansprüche 1 oder 2,
wobei jedem Messkanal (MK) eine eigene Spannungsversorgung (U) zugeordnet ist.

4. Feldgerät nach einem oder mehreren der vorhergehenden Ansprüche,
wobei die Komparatorstufe (4) eines jeden Voterkanals (15) zwei Komparatoren (7) aufweist, die das Ausgangssignal des ausgewählten Messkanals (MK) jeweils mit dem Ausgangssignal der verbleibenden Messkanäle vergleichen, so dass die Ausgangssignale der drei Messkanäle (MK) zweifach von redundanten Komparatoren (7) verglichen werden.

5. Feldgerät nach Anspruch 4,
wobei es sich bei der Fehlererkennungsstufe (5) um eine Logikstufe handelt, die aus Logikgattern (8, 9) aufgebaut ist.

6. Feldgerät nach Anspruch 4 oder 5,
wobei jede Logikstufe aus zwei UND Gattern (8) und einem ODER Gatter (9) oder aus einer gleichwertigen Gatterkombination besteht, wobei an den Eingängen des ersten UND Gatters (8) die Ausgangssignale der Komparatoren (7) des ersten Voterkanals (15.1) anliegen, der dem ausgewählten Messkanal zugeordnet ist, und wobei an dem zweiten UND Gatter (8) die zu den Eingängen des ersten UND Gatters (8) redundanten Ausgangssignale der Komparatoren (7) des zweiten Voterkanals (15.2) und des dritten Voterkanals (15.3) anliegen, und wobei die Ausgangssignale des ersten UND Gatters (8) und des zweiten UND Gatters (8) die Eingangssignale des nachgeschalteten ODER Gatters (9) bilden.

7. Feldgerät nach einem oder mehreren der Ansprüche 1-6,
wobei die Ausgangsauswahlstufe (6) so ausgestaltet ist, dass sie entweder einen Messkanal (MK) auswählt, wenn kein Fehler oder ein Fehler in einem der Messkanäle (MK) oder in einem der Voterkanäle (15) auftritt, oder dass sie eine Fehlermeldung generiert, wenn zumindest zwei Fehler in zumindest zwei Messkanälen (MK) und/oder zwei Voterkanälen (15) auftreten.

8. Feldgerät nach einem oder mehreren der vorhergehenden Ansprüche,
wobei die Ausgangsauswahlstufe (6) einen Multiplexer (10) aufweist, der so ausgestaltet ist, dass er in Abhängigkeit von den Ausgangssignalen der Fehlererkennungsstufe (5) eine Auswahl zwischen den Ausgangssignalen der
Messkanäle (MK) und einem Alarmsignal trifft.

9. Feldgerät nach einem oder mehreren der vorhergehenden Ansprüche,
wobei die Kontroll-/Auswerteeinheit (12) mit Messkanälen (MK) und/oder die zugehörigen Komponenten des Voters (13) bzw. der Voterkanäle (15) zumindest teilweise als rekonfigurierbarer Logikbaustein (FPGA) mit mehreren partiell dynamisch rekonfigurierbaren Funktionsmodulen in den Messkanälen (MK) ausgebildet ist.

10. Feldgerät nach einem oder mehreren der vorhergehenden Ansprüche,
wobei die Kontroll-/Auswerteeinheit (12) die Funktionsmodule in den Messkanälen (MK) in Abhängigkeit von der jeweils definierten sicherheitskritischen Anwendung so konfiguriert, dass das Feldgerät dem geforderten Sicherheitsstandard genügt.

11. Feldgerät nach einem oder mehreren der vorhergehenden Ansprüche,
wobei der Kontroll-/Auswerteeinheit (12) zumindest ein Mikroprozessor (11) zugeordnet ist, der die Funktionsmodule eines Messkanals (MK) und/oder eines Voterkanals (15), in dem ein Fehler detektiert wird partiell dynamisch rekonfiguriert.

12. Feldgerät nach einem oder mehreren der vorhergehenden Ansprüche, wobei zumindest einer der Messkanäle (MK) analogbasiert in einem FPAA konfiguriert ist.

13. Feldgerät nach einem oder mehreren der vorhergehenden Ansprüche,
wobei die einzelnen Messkanäle (MK) so voneinander beabstandet sind, dass eine Temperatur- und/oder eine Spannungsänderung in einem Messkanal (MK) keinen Einfluss auf einen benachbarten Messkanal (MK) haben/hat.

14. Feldgerät nach einem oder mehreren der vorhergehenden Ansprüche,
wobei der zumindest eine Mikroprozessor (14) in einem statischen Bereich des Logikbausteins (FPGA) permanent konfiguriert ist.

## Claims

1. Field device to determine or monitor a process variable in automation engineering, wherein the field device meets a safety standard that is required in a predefined safety-critical application, with a sensor (11) that functions according to a defined measuring principle, and with a control/evaluation unit (12) that prepares and evaluates the measured data provided by the sensor (1) along at least three measuring channels (MK) with a redundant and/or dissimilar design, and
wherein a voter (13) is assigned to the control/evaluation unit (2), **characterized in that**
the voter consists of several components which are at least partially designed with double redundancy,
wherein the voter (13) is designed as a majority voter and has three components:
a comparator stage (4) by means of which the output signals provided by the individual measuring channels (MK) are compared with one another,
an error detection stage (5) which - thanks to an appropriate linking of the output signals of the comparator stage (4) - detects an error occurring in a measuring channel (MK), and an output selection stage (6).

2. Field device as claimed in Claim 1,
wherein the voter (13) consists of multiple voter channels (15), wherein each voter channel (15) comprises a part of the comparator stage (4) and a part of the error detection stage (5) and wherein each voter channel (15) is designed as an integrated part of the corresponding measuring channel (MK).

3. Field device as claimed in one or more of the Claims 1 or 2,
wherein each measuring channel (MK) is assigned its own power supply (U).

4. Field device as claimed in one or more of the previous claims,
wherein the comparator stage (4) of each voter channel (15) has two comparators (7), which each compare the output signal of the selected measuring channel (MK) with the output signal of the remaining measuring channels such that the output signals of the three measuring channels (MK) are compared twice by redundant comparators (7).

5. Field device as claimed in Claim 4,
wherein the error detection stage (5) is a logic stage consisting of logic gates (8, 9).

6. Field device as claimed in Claim 4 or 5,
wherein each logic stage is made from two AND gates (8) and one OR gate (9), or from an equivalent gate combination, wherein the output signals of the comparators (7) of the first voter channel (15.1) are applied to the inputs of the first AND gate (8), said first channel being assigned to the selected measuring channel, and wherein the output signals of the comparators (7) of the second voter channel (15.2) and the third voter channel (15.3), which are redundant in relation to the inputs of the first AND gate (8), are applied to the second AND gate (8), and wherein the output signals of the first AND gate (8) and the second AND gate (8) constitute the input signals of the downstream OR gate (9).

7. Field device as claimed in one or more of the Claims 1-6,
wherein the output selection stage (6) is designed in such a way that it either selects a measuring channel (MK) if no error occurs or if an error occurs in one of the measuring channels (MK) or in one of the voter channels (15), or that it generates an error message if at least two errors occur in at least two measuring channels (MK) and/or two voter channels (15).

8. Field device as claimed in one or more of the previous claims,
wherein the output selection stage (6) has a multiplexer (10), which is designed in such a way that it chooses between the output signals of the measuring channels (MK) and an alarm signal depending on the output signals of the error detection stage (5).

9. Field device as claimed in one or more of the previous claims,
wherein the control/evaluation unit (12) is designed, with measuring channels (MK) and/or the corresponding components of the voter (13) or voter channels (15), at least partially as a reconfigurable logic module (FPGA) with several function modules, which can be reconfigured in a partially dynamic manner, in the measuring channels (MK).

10. Field device as claimed in one or more of the previous claims,
wherein the control/evaluation unit (12) configures the function modules in the measuring channels (MK) depending on the defined safety-critical application in such a way that the field device meets the required safety standard.

11. Field device as claimed in one or more of the previous claims,
wherein at least one microprocessor (11) is assigned to the control/evaluation unit (12), wherein said microprocessor (11) reconfigures, in a partially dynamic manner, the function modules of a measuring channel (MK) and/or of a voter channel (15) in which an error is detected.

12. Field device as claimed in one or more of the previous claims,
wherein at least one of the measuring channels (MK) is configured in an FPAA on an analog base.

13. Field device as claimed in one or more of the previous claims,
wherein the individual measuring channels (MK) are distanced from one another in such a way that a change in the temperature and/or voltage in a measuring channel (MK) does not affect a neighboring measuring channel (MK).

14. Field device as claimed in one or more of the previous claims,
wherein the at least one microprocessor (14) is permanently configured in a static area of the logic module (FPGA).

## Revendications

1. Appareil de terrain destiné à la détermination ou la surveillance d'une grandeur de process dans la technique d'automatisation, l'appareil de terrain répondant à un standard de sécurité exigé par une utilisation prédéfinie, critique en terme de sécurité, lequel appareil de terrain comprend un capteur (11) qui fonctionne d'après un principe de mesure défini, et avec une unité de contrôle / d'exploitation (12), qui traite et exploite les données de mesure fournies par le capteur (1) le long d'au moins trois voies de mesure (MK) conçues de manière redondante et/ou diversitaire, et
un dispositif de décision (13) étant attribué à l'unité de contrôle / d'exploitation (2), **caractérisé**
**en ce que** le dispositif de décision est constitué de plusieurs composants, qui sont conçus au moins partiellement avec une double redondance,
le dispositif de décision (13) étant conçu en tant que dispositif de décision majoritaire et comportant trois composants :
un étage de comparateur (4), par l'intermédiaire duquel les signaux de sortie fournis par les différentes voies de mesure (MK) sont comparés entre eux,
un étage de détection d'erreur (5), qui détecte - grâce à une combinaison appropriée des signaux de sortie de l'étage de comparateur (4) - un dysfonctionnement apparaissant dans une voie de mesure (MK), et un étage de sélection de sortie (6).

2. Appareil de terrain selon la revendication 1,
pour lequel le dispositif de décision (13) se compose de plusieurs voies de dispositif de décision (15), chaque voie de dispositif de décision (15) comprenant une partie de l'étage de comparateur (4) et une partie de l'étage de détection d'erreur (5) et chaque voie de dispositif de décision (15) étant conçue comme partie intégrante de la voie de mesure (MK) correspondante.

3. Appareil de terrain selon l'une ou plusieurs des revendications 1 ou 2,
pour lequel une propre alimentation en tension (U) est attribuée à chaque voie de mesure (MK).

4. Appareil de terrain selon l'une ou plusieurs des revendications précédentes, pour lequel l'étage de comparateur (4) de chaque voie de dispositif de décision (15) comporte deux comparateurs (7), qui comparent le signal de sortie de la voie de mesure (MK) sélectionnée respectivement avec le signal de sortie des voies de mesure restantes, si bien que les signaux de sortie des trois voies de mesure (MK) sont comparés deux fois par des comparateurs (7) redondants.

5. Appareil de terrain selon la revendication 4,
pour lequel il s'agit, concernant l'étage de détection d'erreur (5), d'un étage logique constitué de portes logiques (8, 9).

6. Appareil de terrain selon la revendication 4 ou 5,
pour lequel chaque étage logique se compose de deux portes ET (8) et d'une porte OU (9), ou d'une combinaison de portes équivalente, les signaux de sortie des comparateurs (7) de la première voie de dispositif de décision (15.1) étant appliqués aux entrées de la première porte ET (8), laquelle première voie est attribuée à la voie de mesure sélectionnée, les signaux de sortie des comparateurs (7) de la deuxième voie de dispositif de décision (15.2) et de la troisième voie de dispositif de décision (15.3) - signaux qui sont redondants par rapport aux entrées de la première porte ET (8) - étant appliqués à la deuxième porte ET (8), et les signaux de sortie de la première porte ET (8) et de la deuxième porte ET (8) constituant les signaux d'entrée de la porte OU (9) couplée en aval.

7. Appareil de terrain selon l'une ou plusieurs des revendications 1 à 6,
pour lequel l'étage de sélection de sortie (6) est conçu de telle sorte qu'il sélectionne une voie de mesure (MK) en l'absence de dysfonctionnement ou en cas d'apparition d'un dysfonctionnement dans l'une des voies de mesure (MK) ou dans l'une des voies de dispositif de décision (15), ou génère un message d'erreur en cas d'apparition d'au moins deux dysfonctionnements dans au moins deux voies de mesure (MK) et/ou deux voies de dispositif de décision (15).

8. Appareil de terrain selon l'une ou plusieurs des revendications précédentes,
pour lequel l'étage de sélection de sortie (6) comporte un multiplexeur (10), qui est conçu de telle sorte à ce qu'il effectue, en fonction des signaux de sortie de l'étage de détection d'erreur (5), une sélection entre les signaux de sortie des voies de mesure (MK) et un signal d'alarme.

9. Appareil de terrain selon l'une ou plusieurs des revendications précédentes,
pour lequel l'unité de contrôle / d'exploitation (12) est conçue, avec les voies de mesure (MK) et/ou les composants correspondants du dispositif de décision (13) ou les voies de dispositif de décision (15), au moins partiellement en tant que composant logique reconfigurable (FPGA) avec plusieurs modules de fonction reconfigurables, partiellement de façon dynamique, dans les voies de mesure (MK).

10. Appareil de terrain selon l'une ou plusieurs des revendications précédentes,
pour lequel l'unité de contrôle / d'exploitation (12) configure les modules de fonction dans les voies de mesure (MK) en fonction de l'utilisation définie, critique en terme de sécurité, de telle sorte que l'appareil de terrain soit conforme au standard de sécurité exigé.

11. Appareil de terrain selon l'une ou plusieurs des revendications précédentes,
pour lequel l'unité de contrôle / d'exploitation (12) se voit attribuer au moins un microprocesseur (11), qui reconfigure, en partie de façon dynamique, les modules de fonction d'une voie de mesure (MK) et/ou d'une voie de dispositif de décision (15), dans laquelle une erreur est détectée

12. Appareil de terrain selon l'une ou plusieurs des revendications précédentes,
pour lequel au moins l'une des voies de mesure (MK) est configurée sur une base analogique dans un composant FPAA.

13. Appareil de terrain selon l'une ou plusieurs des revendications précédentes,
pour lequel les différentes voies de mesure (MK) sont espacées les unes par rapport aux autres de telle sorte qu'un changement de température et/ou de tension dans une voie de mesure (MK) n'a/n'ont aucune influence sur une voie de mesure (MK) voisine.

14. Appareil de terrain selon l'une ou plusieurs des revendications précédentes,
pour lequel l'au moins un microprocesseur (14) est configuré de façon permanente dans une zone statique du composant logique (FPGA).
